# EUROPEAN PATENT APPLICATION

(11) **EP 2 387 252 A1**
(43) Date of publication of application: **16.11.2011**
(21) Application number: 09828584.4
(22) Date of filing: 10.10.2009
(51) Int. Cl.: H04R 5/033, H04R 25/00, G02C 11/06

(54) **SPHENO-TEMPORAL BONE CONDUCTION COMMUNICATION AND/OR HEARING AID EQUIPMENT**

(30) Priority: 28.11.2008 CN 200810180751
(71) Applicant: Neovictory Technology Co., Ltd., Taiwan (CN)
(72) Inventor: LEE, Shio-Shiin, Tainan City Taiwan 701 (CN); YEH, Shu-Ming, Tainan City 702 Taiwan (CN)
(74) Representative: Metz, Paul
(86) International application number: PCT/CN2009/074381
(87) International publication number: WO 2010/060323

(57) **Abstract**

A spheno-temporal bone conduction communication equipment and/or hearing aid includes a system device **(1),** a bone skin conduction oscillator **(2)** and a carrier device **(8)** for supporting said abovementioned devices. The carrier device **(8)** has a structural body **(81),** and the structural body **(81)** allows the supported bone skin conduction oscillator **(2)** in close contact with the spheno-temporal bone. The bone skin conduction oscillator **(2)** contains a transducer, and the transducer converts an electrical signal into an acoustic oscillating wave and transmits the acoustic oscillating wave into the inner ear via spheno-temporal bone, or receives an acoustic oscillating wave produced by vibration of the skull when speaking and converts it into an electrical signal. The equipment implements bone conduction transmission of the acoustic oscillating wave via spheno-temporal bone, and can be used in bone conduction speaker, bone conduction microphone, bone conduction multimedia device, bone conduction hearing aid device or bone conduction communication device. The equipment can be used with a nasal bone conduction device, can avoid the defect of much external noise when using air conduction mode and overcome shortcomings of the structure easy to slide and inconvenience to add the component when using commonly used bone conduction.

## Description

### BACKGROUND OF THE INVENTION

### 1. Field of the Invention

The present invention relates to communication technology and more particularly, to a spheno-temporal bone conduction communication equipment and/or hearing aid, which uses a spheno-temporal bone conduction oscillation transducer to match with a communication equipment for speaking and/or hearing application. When combined with a known nasal bone conduction communication hearing aid, an innovative nasal-spheno-temporal bone conduction communication equipment and/or hearing aid is provided.

### 2. Description of the Related Art

Taiwan Patent Publication No. 200627910 discloses a glasses type communication equipment, which adds an extension structure to the temples of the eyeglasses, or modifies the structure of the temples of the eyeglasses so that the extension structure or modified temple structure is kept close to the skull bone area at the front side of the ear corresponding to the elevation of the ear canal for transmitting the outputted sound from the bone-conduction speakers into the user's inner ears. Arranging a bone-conduction speaker at this area achieves excellent bone conduction effects. However, adding the extension structure to the eyeglasses complicates the whole structure and brings inconvenience to storage and use. If the extension structure is a fixed design, the connection between the extension structure and the eyeglasses temple must be strong enough to prevent damage to its narrow and elongated structural body. This problem complicates the fabrication and lowers its reliability. Further, the bone-conduction microphone is arranged around the temporomaindibular joint near the bone-conduction microphone. This arrangement will encounter the same problem as the arrangement of the aforesaid bone-conduction speaker.

Taiwan Patent Publication No. 200830912 discloses a bone-conduction speaker attachable to an eyeglasses temple for close contact with the skull bone skin in front of the ear for transmitting sound into the inner ear via the skull bone. This skull bone area can effectively conduct acoustic oscillating wave. During application, the bone-conduction device is attached to the eyeglasses temple directly or by means of a sleeve. This design of bone-conduction device has a complicated structure. Further, a lead wire is necessary to guide in system signals from an external system device for application.

US Patent Publication No. 2004/0096078A1 discloses a data display device. This design has a light emitting element type display circuit and a speaker installed in the eyeglasses temples. When sensing an electromagnetic wave transmitted from the base station, the system drives the speaker to output sound, telling the user of the incoming of a call. This design pertains to a warning device but not a multimedia device. The speaker used in this system is a conventional mini speaker to be put close to the front side of the ear for sending sound into the ear canal. However, a conventional air-conduction speaker is inferior to a bone-conduction speaker in noise interference protection.

US Patent Publication No. 2005/0275714A1 discloses an interface device using eyeglasses as a carrier, which is a security device having an image pickup or display function and an embedded communication system. The embedded communication system includes a bone-conduction earphone and a bone-conduction microphone arranged at the rear end of the eyeglasses temple for direct contact with the mastoid bone skin. Mastoid bone conduction devices are seen in many inventions. After a long use, due to sliding or loosening of the temple, the mastoid bone conduction device may be not kept in close contact with the ear bone, lowering the sound hearing effect.

US Patent Publication No. 2007/0248238 A1 discloses a detachable electronic package, used with an earphone carried in eyeglasses. The earphone has a lead-out wire or narrow elongated structure for connection with the detachable electronic package. The detachable electronic package also uses a cord member or narrow elongated connection device for fastening to the eyeglasses. The earphone and the electronic package can be installed in the eyeglasses at the rear end of the temple, or at the temple adjacent to the front side of the ear. The earphone used is a conventional design for attaching to the ear to transmit sound into the ear canal by means of air conduction. This design of earphone is inferior to bone conduction earphones in background noise suppression. This design needs an extension structure to connect the electronic packet to the eyeglasses. Further, when arranging the electronic packet is at the back of the neck close to the eyeglasses, the extension structure makes the wearing of the eyeglasses inconvenience.

US Patent Publication No. 2007/0253588 A1 and US2008/0002145 A1(CIP of US2007/0253588 A1) disclose a pair of eyeglasses with a communication device. This design gives emphasis to installation of an earphone in a pair of eyeglasses. The communication device comprises a set of conventional air conduction earphones for attaching to the eyeglasses temples with a cord or extension structure. High stretch electrical wires may be used to electrically connect the earphones. Alternatively, regular electrical wires can be used and inserted through a respective wire groove in the extension structure. The other end of each electrical wire is connected to the communication or multimedia device either directly or through an electrical connector. This design uses conventional earplug type speakers that have a low noise suppression performance when compared to bone conduction speakers. During use, this design is not sensitive to surrounding security-related sound.

US Patent No. 2962564 discloses a structure of eyeglass head phones. According to this design, headphones with two receivers are inserted, each preferably surrounded by a foam pad, into the two auricles of the user and fixed with a hoop, and the hoop, which fixes the two receivers in the auricles of the user, is formed by spectacles, the two receivers being fixed to the free ends of the side pieces and the free ends of the side pieces running essentially in a straight line to the center of the auricles. This design has a high performance in sound conduction. However, it is simply a hearing aid, not designed for use with a multimedia or communication device for multimedia and communication applications. Further, many prior art mastoid bond conduction devices are known. After a long use, due to sliding or loosening of the temple, the mastoid bone conduction device may be not kept in close contact with the ear bone, lowering the sound hearing effect.

US Patent No. 3030456 discloses a bone conduction hearing-aid, which comprises a bone conduction receiver, a microphone and a transistor amplifier integrated together for attaching to the rear end of the eyeglasses temple. When the microphone receives a sound from the surrounding air, it is converted by the transistor amplifier into an electrical signal for driving the bone conduction receiver to transmit a corresponding acoustic oscillating wave into the inner ear by means of bone conduction. This design gives emphasis to the integrated structural design of the bone conduction receiver, microphone and transistor amplifier, having excellent sound conduction effects. However, it can simply be used as a hearing aid, not practical for use with a multimedia or communication device for multimedia broadcast and communication applications. Further, many prior art mastoid bond conduction devices are known. After a long use, due to sliding or loosening of the temple, the mastoid bone conduction device may be not kept in close contact with the ear bone, lowering the sound hearing effect.

US Patent No. 3486047 discloses a transducer structure for sound broadcast, which comprises a transducer element for energy conversion between "vibration and electrical signal" or "pressure and electrical signal". A package structural design is provided for output of sound at a suitable volume and quality level. The design of transducer can be used in a bone conduction speaker. The transducer element can be carried on a headphone or attached to an eyeglasses temple for use as earplug or bone conduction earphone. However, this design is an earphone design, not a multimedia device design. For multimedia or communication application, a wired connection interface is necessary to connect the transducer to an external multimedia system or communication device. Further, many prior art mastoid bond conduction devices are known. After a long use, due to sliding or loosening of the temple, the mastoid bone conduction device may be not kept in close contact with the ear bone, lowering the sound hearing effect.

US Patent No. 6301367 B1 discloses a wearable audio system with acoustic modules. This design explains an acoustic module design, which uses a transducer or speaker element to match with a sound conduction structure. The sound conduction structure is a combination of a resonance chamber and sound tube for enhancing the sound generated by the transducer or speaker and guiding the sound to the opening of the sound tube. The acoustic module can be made in the form of a head loop, or eyeglass or cap mountable design to aim the opening of the sound guide structure at the ear canal without direction insertion, allowing outputted acoustic vibrating wave to be effectively transmitted into the ear canal. This design does not need to insert into the ear canal directly, avoiding sound output device induced hearing damage. However, when a sound wave is being transmitted out of the opening of the sound guide structure into the ear canal by air conduction, it may be interfered by background noises. When compared with conventional air conduction speakers and bone conduction speakers, this design has a low performance in noise suppression. Further, the acoustic modules are connected to an external multimedia system or communication device by electrical wires for multimedia or communication application, not convenient in use.

US Patent No. 6957049 B1 discloses bone conduction speaker-based mobile communication device a handset for a communication unit. This design is a lightweight, small scale communication device using an electrical wire to connect a bone conduction speaker, which has a finger sleeve located on the back side. When using the bone conduction speaker, attach the finger sleeve to the finger and then keep the bone conduction speaker in contact with the forehead area, temple area or check bone area for sound conduction. Further, the microphone is an air conduction microphone mounted in the casing of the communication device. Basically, this design is a communication apparatus, not for multimedia application.

US Patent No. 7004582 B2 discloses an electronically enabled earwear, which comprises earphones, a microphone and communication interface means. The earphones are carried in a respective eyeglasses temple extension structure and kept in contact with the respective ears. The microphone can be installed in the eyeglasses frame, eyeglasses temple or the bridge of the eyeglasses frame. The communication interface device and battery can be installed in the eyeglasses temples or the specially designed and upwardly extended eyeglasses temples. The earphones used in this design can be of conventional earplug type or headphone type design. The microphone can be a conventional air conduction design, or a bone conduction design. When a bone conduction microphone is used, it can be installed in the eyeglasses hear the skull bone. The design is connectable to a communication or multimedia device by means of its wireless communication interface. Using conventional earphones to generate sound tends to be interfered by background noises and will isolate external audio warning signal. When compared with bone conduction speakers, the air conduction speakers have a low performance in background noise suppression.

US Patent No. 7076077 B2 discloses a bone conduction headset, which comprises: a band running around a back part of the user's head; a fastening portion formed in each of opposite end portions of the band; a bone conduction speaker provided with a knob which is engaged with the fastening portion; and, an ear engagement portion, which runs over the bone conduction speaker during wearing of the headset to reach and engage with the user's ear. An extension of either the fastening portion in the band or a casing of the bone conduction speaker may be formed into the ear engagement portion. This design simply uses bone conduction speakers for generating sound. It does not provide a microphone for picking up sound. During application, it must be used with other driver means or multimedia device for receiving sound. This design is simply a speaker design for hearing application.

US Patent No. 7310427 B2 discloses a recreational bone conduction audio device/system. The device uses transducers to produce sounds in the low, mid and high frequency ranges. Each transducer is designed for allowing adjustment of its position. By means of wired or wireless communication, musical signal is transmitted to the system. The transducers can be ultrasonic transducers or vibration sensing type transducers. Every transducer is coated with a layer of waterproof polymeric covering to provide a waterproof characteristic for land and underwater applications. The wearing measure can be: head loop (or headband) for swimming or recreational application, cap ridge, helmet rim, swimming goggle band. This design is mainly for broadcasting audio frequency signals. It does not mention any audio frequency signal pickup techniques, and therefore, it cannot be used for communication application.

In view of the aforesaid cited references, the conventional air conduction microphones cannot suppress background noises and tend to cause hearing damage due to transmission of sound into the ear canal by means of vibrating the air. Further, the conventional bone conduction devices may slip easily during application, lowering their acoustic vibrating wave conduction performance. Further, these conventional bone conduction devices require the support of an extension structure for support, bringing inconvenience to eyewear wearing and storage.

The invention provide a bone skin conduction transducer carrier and system to keep a bone skin conduction transducer in close contact with the spheno-temporal bone area, improving the drawbacks of conventional communication equipment and/or hearing-aid.

Nasal bone conduction communication equipments and hearing-aids are known for transmitting acoustic vibrating waves by means of the nasal bones for speaking and/or hearing applications. These exemplars are seen as follow:
Taiwan Patent No. 1255611 "Nasal bone conduction wireless communication transmission apparatus"; Taiwan Patent No. 1264237 "Nasal bond conduction hearing-aid". These two designs commonly use a respective transducer to pick up acoustic vibrating waves or to generate acoustic vibrating waves.

US Patent No. 4520238 "PICKUP DEVICE FOR PICKING UP VIBRATION TRANSMITTED THROUGH BONES", which teaches the design of a microphone mounted as a nosepiece for direct contact with the nose. During application, the pickup device must be used with a communication equipment or multimedia device.

When compared with the spheno-temporal conduction design of the present invention, the cited nasal bone conduction designs has the advantage that a relatively greater acoustic oscillating signal can be picked up by means of the nasal bone than that by means of the spheno-temporal bone. However, the signal picked up by means of the spheno-temporal bone can be enhanced to a certain level subject to circuit improvement (the electrical signal is about within the range of several hundred mini volts to several volts). In hearing application, nasal bone conduction technique must amplify the acoustic wave signal or use a better transducer to attend the quality of a spheno-temporal bone conduction design. However, a relatively better performance transducer requires better quality materials and has a relatively larger dimension, complicating the fabrication.

### SUMMARY OF THE INVENTION

With respect to hearing and sending of voice, the invention emphasizes bone skin conduction. More particularly, a carrier device having a structural body for bridging the spheno-temporal bone area (for example, each temple of a pair of eyeglasses extends from the glasses frame over the user's spheno-temporal bone area to the top side of the user's ear) to keep a bone conduction input and output means in close contact with the spheno-temporal bone skin for the transmission of an acoustic oscillating wave into the user's inner ear via the spheno-temporal bone. Further, the spheno-temporal bone area is defined to be the area above the zygomatic arch, below the bottom edge of the calvarium, behind the orbital and in front of the ear.

Therefore, it is the main object of the present invention to provide a spheno-temporal bone conduction communication equipment and/or hearing-aid, which uses a spheno-temporal bone conduction oscillation transducer to match with a communication equipment and/or hearing aid, eliminating external noise interference. Further, a carrier device having a structural body is used to carry the communication equipment and/or hearing aid, eliminating the use of any extension architecture and enhancing the convenience of use.

The technical structure of the present invention will be explained in four embodiments.

A spheno-temporal bone conduction communication equipment in accordance with a first embodiment of the invention comprises at least:
a system device for receiving and processing an audio signal transmitted by an external communication device and converting the audio signal into an electrical signal and then transmitting the electrical signal by means of communication transmission;
a bone skin conduction oscillator electrically coupled with the system device, the bone skin conduction oscillator comprising oscillation transducer means for converting an acoustic oscillating wave into an electrical signal and an electrical signal into an acoustic oscillating wave;
a carrier device carrying the system device and the bone skin conduction oscillator;
wherein the carrier device comprises a structural body carrying the bone skin conduction oscillator for bridging the spheno-temporal bone area of the user and allowing the bone skin conduction oscillator in close contact with the spheno-temporal bone skin of the user for bone skin conduction of acoustic oscillating wave; the spheno-temporal bone area is the area above the zygomatic arch, below the bottom edge of the calvarium, behind the orbital and in front of the ear.

Further, the carrier device is selected from the group of optical glasses, sunglasses, sports glasses, wind goggles, snow goggles and eyewear means. Further, the oscillation transducer means of the bone skin conduction oscillator is selected from the group of piezoelectric component, PVDF (polymer of vinylidene fluoride) thin-film electronic component, electromagnetic component, electro-acoustic component and other components capable for conversion between electrical and mechanical (acoustic) energies.

Further, the oscillation transducer means of the bone skin conduction oscillator comprises a first oscillation transducer adapted for converting an electrical signal into an acoustic oscillating wave and/or a second oscillation transducer adapted for converting an acoustic oscillating wave into an electrical signal.

Further, the system device comprises at least a power supply device, a signal processing module and an audio processing circuit. The power supply device is adapted for providing the signal processing module, the audio processing circuit and the bone skin conduction oscillator with the necessary working power. Further, the signal processing module is adapted for transmitting and receiving a communication signal by means of a wired and/or wireless communication transmission interface and/or processing the communication signal to control and encode/decode an audio signal, comprising therein a programmable digital signal processing system.

Further, the audio processing circuit is electrically coupled with the signal processing module and the first oscillation transducer and/or the second oscillation transducer for processing audio input and/or output signals of the signal processing module to have the audio output signal be converted into an electrical signal for driving the first oscillation transducer to produce an acoustic oscillating wave, and/or for processing the electrical signal converted by the second oscillation transducer from an acoustic oscillating wave into an audio input signal subject to a predetermined specification.

The system device further comprises a display device adapted for displaying system related information for the user, power on/off status and communication connection/disconnection status.

The system device further comprises a switch device adapted for switching on/off the signal processing module, adjusting sound volume and selection of predetermined options.

A second embodiment of the invention is made in the form of a spheno-temporal bone conduction hearing aid, which comprises:
a system device for receiving and processing an audio signal;
a bone skin conduction oscillator electrically coupled with the system device, the bone skin conduction oscillator comprising oscillation transducer means for converting an acoustic oscillating wave into an electrical signal;
a surrounding sound pickup device electrically coupled with the system device, comprising an air-conduction microphone;
a carrier device carrying the system device, the bone skin conduction oscillator and the surrounding sound pickup device;
wherein the carrier device comprises a structural body carrying the bone skin conduction oscillator for bridging the spheno-temporal bone area of the user and allowing the bone skin conduction oscillator in close contact with the spheno-temporal bone skin of the user for bone skin conduction of acoustic oscillating wave; the surrounding sound pickup device is adapted for picking up surrounding sound signal for enabling the sound signal to be processed by the system device to drive the bone conduction oscillator in converting the sound signal into an acoustic oscillating wave and transmitting the acoustic oscillating wave into the inner ear of the user via the spheno-temporal bone of the user; the spheno-temporal bone area is the area above the zygomatic arch, below the bottom edge of the calvarium, behind the orbital and in front of the ear.

Similar to the aforesaid first embodiment of the present invention, the carrier device of this second embodiment is selected from the group of optical glasses, sunglasses, sports glasses, wind goggles, snow goggles and eyewear means. Further, the oscillation transducer means of the bone skin conduction oscillator of this second embodiment is selected from the group of piezoelectric component, PVDF (polymer of vinylidene fluoride) thin-film electronic component, electromagnetic component, electro-acoustic component and other components capable for conversion between electrical and mechanical (acoustic) energies, forming a "bone skin conduction speaker".

Further, the surrounding sound pickup device is adapted for picking up surrounding sound signal and converting it into an electrical signal, and then providing the electrical signal to the system device.

Further, the system device comprises at least a power supply device, a signal processing module and an audio processing circuit. The oscillation transducer means of the bone skin conduction oscillator comprises a first oscillation transducer adapted for converting an electrical signal into an acoustic oscillating wave. Further, the signal processing module is adapted for transmitting the electrical signal outputted by the surrounding sound pickup device to the audio processing signal for processing into an electrical signal capable of driving the first oscillation transducer to produce an acoustic oscillating wave.

A third embodiment of the invention is made in the form of a spheno-temporal bone conduction communication equipment and hearing aid equipment, which comprises at least:
a system device for receiving and processing an audio signal and converting the audio signal into an electrical signal for output, the system device comprising a power supply device, a signal processing module and an audio processing circuit;
a bone skin conduction oscillator electrically coupled with the system device, the bone skin conduction oscillator comprising oscillation transducer means adapted for converting an acoustic oscillating wave into an electrical signal and an electrical signal into an acoustic oscillating wave;
a surrounding sound pickup device electrically coupled with the system device, the surrounding sound pickup device comprising an air-conduction microphone;
a carrier device carrying the system device and the bone skin conduction oscillator and the surrounding sound pickup device;
wherein the carrier device comprises a structural body carrying the bone skin conduction oscillator for bridging the spheno-temporal bone area of the user and allowing the bone skin conduction oscillator in close contact with the spheno-temporal bone skin of the user for bone skin conduction of acoustic oscillating wave; the signal processing module of the system device is switchable between a communication mode and a hearing-aid mode.

Further, the technique of Taiwan Patent No. 1255611 "Nasal bone conduction wireless communication transmission equipment", Taiwan Patent No. 1264237 "Nasal bone conduction hearing aid" and US Patent No. 4520238 "Pickup device for picking up vibration transmitted through bones" may be introduced to arrange a bone conduction microphone or speaker at the nasal bone area, forming a fourth embodiment of the present invention. This fourth embodiment of the invention is made in the form of a nasal bone conduction combined spheno-temporal bone conduction communication equipment, which comprises at least:
a system device for receiving and processing an audio signal transmitted by an external communication device and converting the audio signal into an electrical signal for output;
a bone skin conduction oscillator electrically coupled with the system device, the bone skin conduction oscillator comprising oscillation transducer means adapted for converting an acoustic oscillating wave into an electrical signal and an electrical signal into an acoustic oscillating wave;
a carrier device carrying the system device and the bone skin conduction oscillator;
wherein the carrier device comprises a structural body carrying the bone skin conduction oscillator for close contact with the spheno-temporal bone skin of the user for bone skin conduction of an acoustic oscillating wave and a nose pad for close contact with the nasal bone skin of the user for bone skin conduction of an acoustic oscillating wave; the oscillation transducer means of the bone skin conduction oscillator comprises a first oscillation transducer and a second oscillation transducer alternatively selectively installed in the structural body and the nose pad for bone skin conduction of an acoustic oscillating wave.

Further, nasal bone conduction technique can be introduced into a spheno-temporal bone conduction communication equipment and hearing aid to provide a nasal bone conduction combined spheno-temporal bone conduction communication equipment and hearing aid, which comprises at least:
a system device for receiving and processing an audio signal and converting the audio signal into an electrical signal for output, the system device comprising a power supply device, a signal processing module and an audio processing circuit;
a bone skin conduction oscillator electrically coupled with the system device, the bone skin conduction oscillator comprising oscillation transducer means for converting an acoustic oscillating wave into an electrical signal and an electrical signal into an acoustic oscillating wave;
a surrounding sound pickup device electrically coupled with the system device, the surrounding sound pickup device comprising an air-conduction microphone;
a carrier device carrying the system device and the bone skin conduction oscillator and the surrounding sound pickup device;
wherein the carrier device comprises a structural body carrying the bone skin conduction oscillator for close contact with the spheno-temporal bone skin of the user for bone skin conduction of an acoustic oscillating wave and a nose pad for close contact with the nasal bone skin of the user for bone skin conduction of an acoustic oscillating wave; the oscillation transducer means of the bone skin conduction oscillator comprises a first oscillation transducer and a second oscillation transducer alternatively selectively installed in the structural body and the nose pad for bone skin conduction of an acoustic oscillating wave; the signal processing module of the system device is switchable between a communication mode and a hearing-aid mode.

### BRIEF DESCRIPTION OF THE DRAWINGS

FIG. 1 is a circuit block diagram of a spheno-temporal bone conduction communication equipment.
FIG. 2 is a perspective view of a carrier device of the spheno-temporal bone conduction communication equipment in accordance with the present invention.
FIG. 3 is a schematic applied view of the present invention, illustrating the carrier device of the spheno-temporal bone conduction communication equipment worn on a user.
FIG. 4 is a circuit block diagram of a spheno-temporal bone conduction hearing aid in accordance with the present invention.
FIG. 5 is a perspective view of the carrier device of the spheno-temporal bone conduction hearing aid in accordance with the present invention.
FIG. 6 is a schematic applied view of the present invention, illustrating the carrier device of the spheno-temporal bone conduction hearing aid worn on a user.
FIG. 7 is a circuit block diagram of a spheno-temporal bone conduction communication equipment and hearing aid in accordance with the present invention.
FIG. 8 is a perspective view of the carrier device of the spheno-temporal bone conduction communication equipment and hearing aid in accordance with the present invention.
FIG. 9 is a schematic plain view of the carrier device of the spheno-temporal bone conduction communication equipment (and hearing aid) in accordance with the present invention.
FIG. 10 corresponds to FIG. 9, illustrating an alternate form of the arrangement of the spheno-temporal bone conduction communication equipment (and hearing aid).

### DETAILED DESCRIPTION OF THE PREFERRED EMBODIMENT

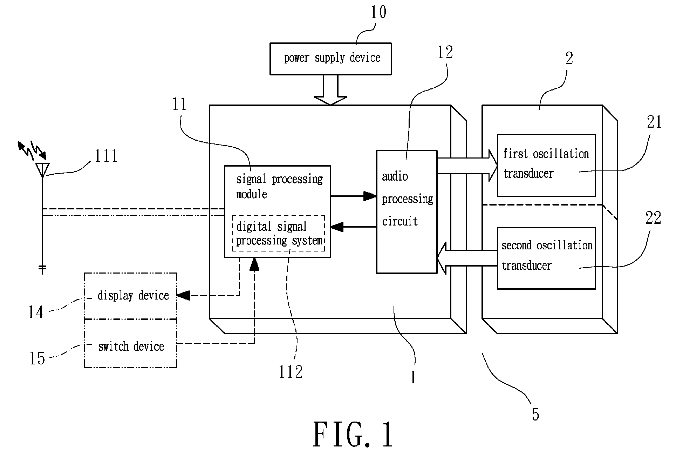

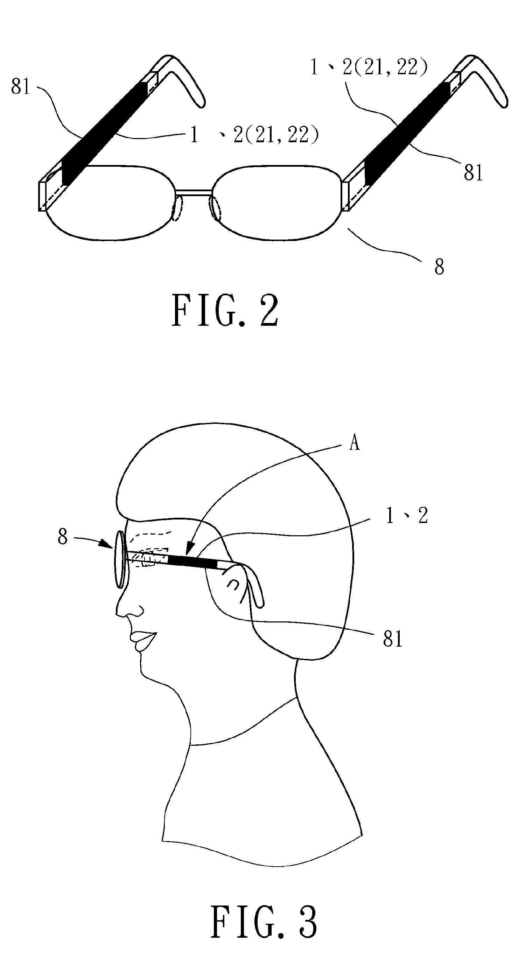

Referring to FIG. 1, a spheno-temporal bone conduction communication equipment **5** in accordance with the present invention is shown comprising a system device **1,** a bone skin conduction oscillator **2** and a carrier device **8** (see FIG. 2).

The system device **1** (see FIG. 1) comprises at least a power supply device **10,** a signal processing module **11** and an audio processing circuit **12.** The power supply device **10** provides the system device **1** with the necessary working power. Further, the power supply device **10** can be a battery or any other means capable of providing the necessary working power. The signal processing module **11** and the audio processing circuit **12** are electrically coupled with each other for processing and outputting fetched audio signal. The system device **1** further comprises a display device **14** and a switch device **15** respectively coupled with the signal processing module **11** for status display and on/off and adjustment control, enhancing convenience. The signal processing module **11** comprises a communication interface **111** for wired or wireless communication transmission. The communication interface **111** can be a wire communication interface, a wireless communication interface, or a combination of a wire communication interface and a wireless communication interface prepared subject a predetermined communication protocol. Further, the display device **14** can be a LED display device or LCD display device driven by an output signal of the signal processing module **11** to display power on/off status, battery capacity and communication interface connection status. The switch device **15** works as an input device for the signal processing module **11,** and adapted for power on/off control, communication connection control, audio signal volume control and multimedia equipment music selection control.

The bone skin conduction oscillator **2** contains a transducer for conversion between an electrical signal and an acoustic oscillating wave. It can be a piezoelectric component, PVDF (polymer of vinylidene fluoride) thin-film electronic component, electromagnetic component, electro-acoustic component, or any other component capable for conversion between electrical and mechanical (acoustic) energies. The bone skin conduction oscillator **2** comprises a first oscillation transducer **21** and/or a second oscillation transducer **22.** The first oscillation transducer **21** can convert an electrical signal into an acoustic oscillating wave, i.e., it can be a bone conduction speaker for converting an electrical signal into an acoustic oscillating wave and transmitting the acoustic oscillating wave into the inner ear via spheno-temporal bone. The second oscillation transducer **22** can convert an acoustic oscillating wave into an electrical signal, i.e., it can be a bone skin conduction microphone for receiving an acoustic oscillating wave produced by vibration of the skull when speaking and converting it into an electrical signal.

Further, the signal processing module **11** has therein a digital signal processing system **112** for the conversion of "audio signal" between different levels, and coding and decoding between "communication signal" and "control/audio/data signal". The signal processing module **11** can transmit and receive wired or wireless communication signal by means of the communication interface **111.** The audio processing circuit **12** can process audio input and output signals of the spheno-temporal bone conduction communication equipment **5.** The voice output signal processing operation of the audio processing circuit **12** is to regulate and amplify the electrical audio signal processed by the signal processing module **11** into an electrical signal sufficient for driving the first oscillation transducer **21** to produce an acoustic oscillating wave and to transmit the acoustic oscillating wave into the inner ear via spheno-temporal bone. The voice input signal processing operation of the audio processing circuit **12** is to process and amplify the electrical signal that is converted by the second oscillation transducer 22 from an acoustic oscillating wave picked up by the second oscillation transducer **22,** and then to transmit the processed and amplified signal to the system device **1** for further processing by the signal processing module **11.**

The system device **1** further provides a plurality of alternatively selectable wired and/or wireless communication transmission protocols (wireless communication protocols can be: Bluetooth, UWB, Wi-Fi, Zigbee, RFID, and etc.; wired communication protocols can be: USB, RS232, UART, IEEE1394, and etc. Except the method of manual operation to select the desired communication transmission protocol, the programmable digital signal processing system **112** of the signal processing module **11** can sense the communication protocol of a communication request from a peripheral device, enabling the system device **1** to automatically select the communication protocol for connection.

The carrier device **8** (see FIG. 2) carries the system device **1** and the bone skin conduction oscillator **2,** comprising a structural body **81** (for example, temple) bridging the spheno-temporal bone area **A** (see FIG. 3) and allowing the supported bone skin conduction oscillator **2** in close contact with the spheno-temporal bone skin for bone skin conduction of acoustic oscillating wave. According to the embodiment shown in FIG. 2, the system device **1** and the bone skin conduction oscillator **2** are mounted in the structural body **81.** The spheno-temporal bone skin area of the spheno-temporal bone area **A** indicates the area above the zygomatic arch, below the bottom edge of the calvarium, behind the orbital and in front of the ear. Further, the carrier device **8** can be optical glasses, sunglasses, sports glasses, wind goggles, snow goggles or any of a variety of other eyewear having a structural body **81** for bridging the spheno-temporal bone area **A.**

Subject to the aforesaid composition, the operation of the spheno-temporal bone conduction communication equipment **5** is outlined hereinafter. When the power supply device **10** is providing electric power to the system device **1,** the spheno-temporal bone conduction communication equipment **5** is connected to a peripheral device (such as cell phone, multimedia communication device or multimedia system device) after selection of the desired wired or wireless communication protocol. At this time, the first oscillation transducer **21** of the bone skin conduction oscillator 2 is used to receive sound and the second oscillation transducer **22** is used to pick up the user's voice, enabling audio signals to be transmitted between the system device **1** and the peripheral device by means of the communication interface **111** of the signal processing module **11.**

FIG. 2 illustrates an example of the carrier device **8** of the spheno-temporal bone conduction communication equipment **5** in the form of a pair of glasses (optical glasses or sunglasses). Each temple of the glasses has a part (structural body **81** of the carrier device **8**) kept in close contact with the spheno-temporal bone. The system device **1** and the bone skin conduction oscillator **2** are installed in this part for bone skin conduction of acoustic oscillating wave. The system device **1** and the bone skin conduction oscillator **2** are arranged in the two temples subject to their space occupation status. The bone skin conduction oscillator **2** can be made having one first oscillation transducer **21** installed in each of the left and right temples for outputting stereo acoustic oscillating wave. For the input of stereo acoustic oscillating wave, the bone skin conduction oscillator **2** can be made having one second oscillation transducer **22** installed in one or each of the left and right temples. According to the embodiment shown in FIG. 2, the bone skin conduction oscillator **2** is made having one first oscillation transducer **21** and one second oscillation transducer **22** installed in each of the two temples.

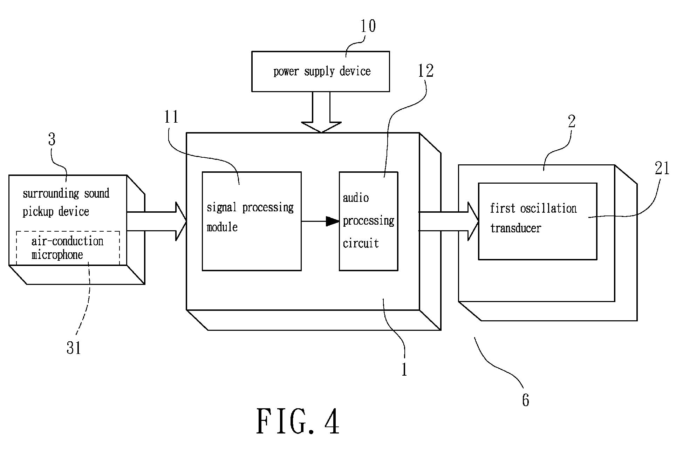

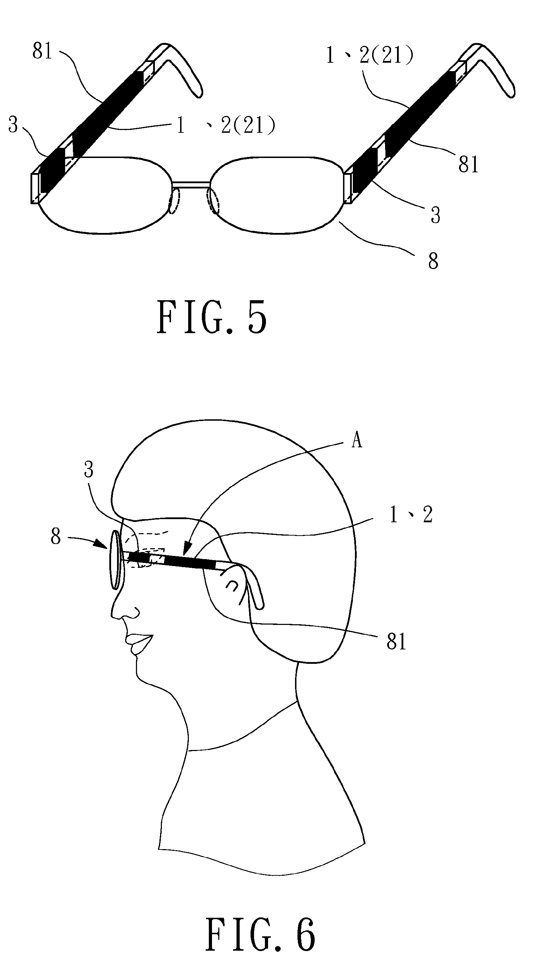

FIG. 4 is a circuit block diagram of a spheno-temporal bone conduction hearing aid **6** in accordance with the present invention. As illustrated, the spheno-temporal bone conduction hearing aid **6** comprises a system device **1,** a bone skin conduction oscillator **2,** a surrounding sound pickup device **3** and a carrier device **8** (see FIG. 5). The system device **1** comprises at least a power supply device **10,** a signal processing module **11** and an audio processing circuit **12.** The bone skin conduction oscillator **2** comprises a first oscillation transducer **21** that is a bone conduction speaker for converting an electrical signal into an acoustic oscillating wave and transmitting the acoustic oscillating wave into the inner ear via spheno-temporal bone. The surrounding sound pickup device **3** comprises a conventional air-conduction microphone **31** adapted to pick up the speaker's voice through the air media. The carrier device **8** (see FIG. 5) carries the system device **1,** the bone skin conduction oscillator **2** and the surrounding sound pickup device **3,** comprising a structural body **81** (for example, temple) bridging the spheno-temporal bone area **A** (see FIG. 6) and allowing the supported bone skin conduction oscillator **2** in close contact with the spheno-temporal bone skin for bone skin conduction of acoustic oscillating wave. The surrounding sound pickup device **3** can be installed in the front end of the temple (see FIGS. 5 and 6), or any other position. Further, the carrier device **8** can be optical glasses, sunglasses, sports glasses, wind goggles, snow goggles or any of a variety of other eyewear having a structural body **81** for bridging the spheno-temporal bone area **A.**

The system device **1** controls and processes the operation of the spheno-temporal bone conduction hearing aid **6.** The power supply device **10** provides the system device **1** with the necessary working power. The signal processing module **11** is adapted for processing the electrical signal converted from surrounding audio signal picked up by the surrounding sound pickup device **3** (such as filtering, auto gain control), and then transmitting the processed signal to the audio processing circuit **12** for regulation and amplification so that the amplified signal can drive the first oscillation transducer **21** of the bone skin conduction oscillator **2.**

The operation of the spheno-temporal bone conduction hearing aid **6** is outlined hereinafter. When the power supply device **10** provides electric power to the system device **1,** the surrounding sound pickup device **3** (air-conduction microphone **31**) picks up surrounding sound and converts it into an electrical signal and then transmits the electrical signal to the signal processing module **11** for processing. After processing, the signal processing module **11** transmits the processed signal to the audio processing circuit **12,** enabling the signal to be regulated for driving the first oscillation transducer **21** to produce an acoustic oscillating wave and to transmit the acoustic oscillating wave into the inner ear via spheno-temporal bone.

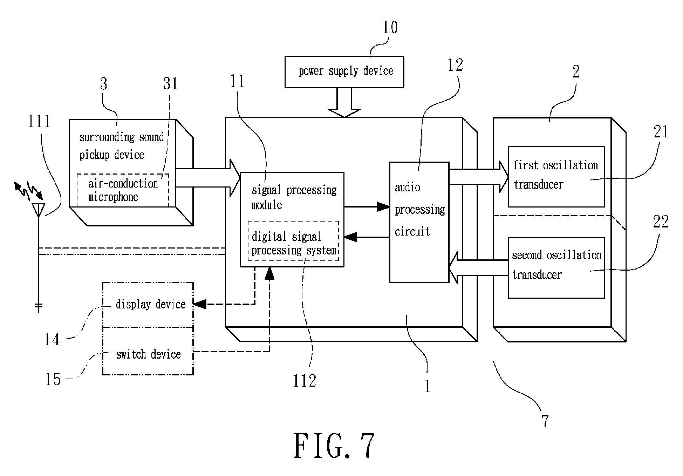

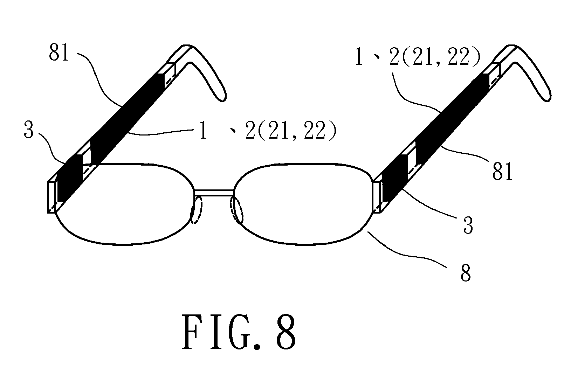

FIG. 7 is a circuit block diagram of a spheno-temporal bone conduction communication equipment and hearing aid **7** in accordance with the present invention. As illustrated, the spheno-temporal bone conduction communication equipment and hearing aid **7** comprises a system device **1,** a bone skin conduction oscillator **2,** a surrounding sound pickup device **3** and a carrier device **8** (see FIG. 8). The system device **1** comprises at least a power supply device **10,** a signal processing module **11** and an audio processing circuit **12.** The power supply device **10** provides the system device **1** with the necessary working power. Further, the power supply device **10** can be a battery or any other means capable of providing the necessary working power. The signal processing module **11** and the audio processing circuit **12** are electrically coupled with each other for processing and outputting fetched audio signal. The system device **1** further comprises a display device **14** and a switch device **15** respectively coupled with the signal processing module **11** for status display and on/off and adjustment control, enhancing convenience. The signal processing module **11** comprises a communication interface **111** for wired or wireless communication transmission. The communication interface **111** can be a wire communication interface, a wireless communication interface, or a combination of a wire communication interface and a wireless communication interface prepared subject a predetermined communication protocol. Further, the display device **14** can be a LED display device or LCD display device driven by an output signal of the signal processing module **11** to display power on/off status, battery capacity and communication interface connection status. The switch device **15** works as an input device for the signal processing module **11,** and adapted for power on/off control, communication connection control, audio signal volume control and multimedia equipment music selection control. Further, the signal processing module **11** has built therein a digital signal processing system 112.

The bone skin conduction oscillator **2** contains a transducer for conversion between an electrical signal and an acoustic oscillating wave. It can be a piezoelectric component, PVDF (polymer of vinylidene fluoride) thin-film electronic component, an electromagnetic component, an electro-acoustic component, or any other component capable for conversion between electrical and mechanical (acoustic) energies. The bone skin conduction oscillator **2** comprises a first oscillation transducer **21** and/or a second oscillation transducer **22.** According to the embodiment shown in FIG. 7, the bone skin conduction oscillator **2** comprises a first oscillation transducer **21** and a second oscillation transducer **22.** The first oscillation transducer **21** can convert an electrical signal into an acoustic oscillating wave, i.e., it can be a bone conduction speaker for converting an electrical signal into an acoustic oscillating wave and transmitting the acoustic oscillating wave into the inner ear via spheno-temporal bone. The second oscillation transducer **22** can convert an acoustic oscillating wave into an electrical signal, i.e., it can be a bone skin conduction microphone for receiving an acoustic oscillating wave produced by vibration of the skull when speaking and converting it into an electrical signal. As the first oscillation transducer **21** of the bone skin conduction oscillator **2** can convert an electrical signal into an acoustic oscillating wave, a user can wear the spheno-temporal bone conduction communication equipment and hearing aid **7** to assist in hearing without using any extra hearing aid.

The surrounding sound pickup device **3** comprises a conventional air-conduction microphone **31** adapted to pick up the speaker's voice through the air media and to transmit the fetched audio signal to the signal processing module **11** of the system device **1** for processing. After processing, the signal processing module **11** transmits the processed signal to the audio processing circuit **12** for driving the first oscillation transducer **21** to produce an acoustic oscillating wave and to transmit the acoustic oscillating wave into the inner ear via spheno-temporal bone. Thus, the spheno-temporal bone conduction communication equipment and hearing aid **7** has hearing aid functions.

The carrier device **8** (see FIG. 8) carries the system device **1,** the bone skin conduction oscillator 2 and the surrounding sound pickup device 3, comprising a structural body 81 (for example, temple) bridging the spheno-temporal bone area **A** (see FIG. 6) and allowing the supported bone skin conduction oscillator **2** in close contact with the spheno-temporal bone skin for bone skin conduction of acoustic oscillating wave. The surrounding sound pickup device **3** can be installed in the front end of the temple. The spheno-temporal bone conduction communication equipment and hearing aid **7** provides a hearing-impaired person with hearing aid and communication functions in one single device. The spheno-temporal bone conduction communication equipment and hearing aid **7** is switchable between the hearing aid mode and the communication mode. The switching can be a hardware switching operation manually performed by means of the switch device **15.** Alternatively, the switching can be a software switching operation automatically performed by the internal programmable digital signal processing system **112** of the signal processing module **11.**

The operation of the spheno-temporal bone conduction communication equipment and hearing aid **7** is outlined hereinafter. After conduction of the power supply device **10** to provide the system device **1** with the necessary working power, the power switch of the switch device **15** is switched on. At this time, the display device **14** displays the status of power-on and the status of connection-off. At this time, the user needs to set the mode of "Communication" or "Hearing-aid". When the mode of "Communication" is selected, it is necessary to select the communication interface. In case of wired communication, the system device **1** scans the input of a communication inquiry signal, or the communication interface **111** of the system device **1** directly outputs a communication inquiry signal to the peripheral device. In case of wireless communication, the connection switch of the switch device **15** is pressed, enabling the communication interface **111** of the system device **1** of the spheno-temporal bone conduction communication equipment and hearing aid **7** to send out a communication inquiry signal or to scan any external wireless communication inquiry signal for intercommunication. The peripheral device can be a cell phone, computer, auto electric home appliance, or any other multimedia or communication apparatus. After connection, the display device **14** displays the status of connection-on. On the contrary, the switch device **15** can be operated to disconnect the connection and to switch off power. At this time, the display device **14** displays the status of connection-off and the status of power-off. When the connection is interrupted during communication, the display device **14** will also display the related status.

When the mode "Hearing-aid" is set, the power supply device **10** starts to provide the necessary working power. At this time, the surrounding sound pickup device **3** picks up surrounding sound and converts it into an electrical signal and then transmits the electrical signal to the signal processing module **11** for processing. After processing, the signal processing module **11** transmits the processed signal to the audio processing circuit **12** for driving the first oscillation transducer **21** to produce an acoustic oscillating wave and to transmit the acoustic oscillating wave into the inner ear via spheno-temporal bone. Thus, the user can hear the sound.

With respect to auto switching between "Communication" and "Hearing-aid", the signal processing module **11** can be set in the hearing-aid mode to keep in connection with the peripheral communication equipment, such as cell phone or telephone, or multimedia equipment. When a connection inquiry signal is detected, it is automatically switched to the communication mode, or the signal processing module **11** is automatically switched to receive audio signal from the peripheral multimedia equipment when the peripheral multimedia equipment is playing a music, enabling the first oscillation transducer **21** of the bone skin conduction oscillator **2** to convert the signal into an acoustic oscillating wave and to output the acoustic oscillating wave into the inner ear via spheno-temporal bone.

When the spheno-temporal bone conduction communication equipment and hearing aid **7** is in the connection status after power-on, the user can wear the carrier device **8** of the spheno-temporal bone conduction communication equipment and hearing aid **7.** If the peripheral device encodes the audio signal into a communication signal and transmits the communication signal to the spheno-temporal bone conduction communication equipment and hearing aid **7,** the signal processing module **11** of the system device **1** will decode the communication signal into an audio signal, enabling the audio signal to be further amplified by the audio processing circuit **12** for driving the first oscillation transducer **21** to produce an acoustic oscillating wave and to transmit the acoustic oscillating wave into the inner ear via spheno-temporal bone. Thus, the user can hear the sound. When transmitting an audio signal from the spheno-temporal bone conduction communication equipment and hearing aid **7** to a peripheral device, for example, when the user is speaking, the throat makes the air vibrate to produce sound. At the same time, the acoustic oscillating wave thus produced is transferred through the spheno-temporal bone to the closely attached bone skin conduction oscillator **2** of the spheno-temporal bone conduction communication equipment and hearing aid **7,** and then converted by the second oscillation transducer **22** into an electrical signal, which is then amplified by the audio processing circuit **12** and then guided into the signal processing module **11.** Upon receipt of the amplified signal, the signal processing module **11** encodes the signal into a communication signal for transmission to the peripheral device, which decodes the signal into an audio signal. Thus, the peripheral device end can hear the sound or acoustic signal transmitted by the spheno-temporal bone conduction communication equipment and hearing aid **7.**

Referring to FIG. 8, the carrier device **8** of the spheno-temporal bone conduction communication equipment and hearing aid **7** can be, for example, a pair of optical glasses or sunglasses. Each temple of the optical glasses or sunglasses has a part (structural body **81** of the carrier device **8**) kept in close contact with the spheno-temporal bone. The system device **1** and the bone skin conduction oscillator **2** are installed in this part for bone skin conduction of acoustic oscillating wave. The system device **1** and the bone skin conduction oscillator **2** are arranged in the two temples subject to their space occupation status. The bone skin conduction oscillator **2** can be made having one first oscillation transducer **21** installed in each of the left and right temples for outputting stereo acoustic oscillating wave. For the input of stereo acoustic oscillating wave, the bone skin conduction oscillator **2** can be made having one second oscillation transducer **22** installed in one or each of the left and right temples. According to the embodiment shown in FIG. 8, the bone skin conduction oscillator **2** is made having one first oscillation transducer **21** and one second oscillation transducer **22** installed in each of the two temples. For the application of "Hearing-aid", the surrounding sound pickup device **3** can be arranged at the front end of one temple, or the left front block area or right front block area relative to the temples. For better surrounding sound sensing, the surrounding sound pickup device **3** can be arranged at the left front block area and right front block area relative to the temples. After conversion by the system device **1,** the left and right acoustic signals of different phases and sound volumes are transmitted to the bone skin conduction oscillator **2** in the structural body **81.** This arrangement enhances the hearing of the hearing-impaired user and traffic safety.

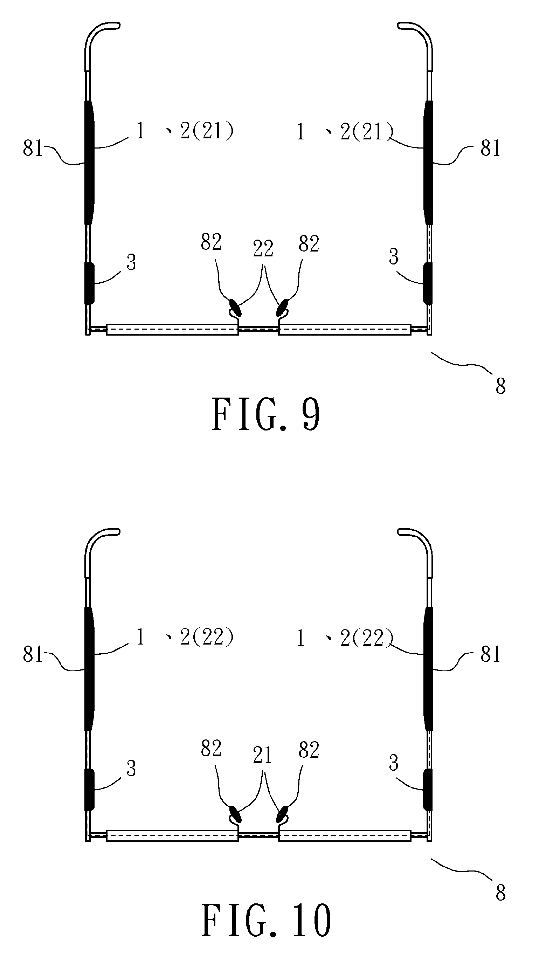

Further, as shown in FIG. 9, the invention introduces the technique of Taiwan Patent No. 1255611 "Nasal bone conduction wireless communication transmission equipment", Taiwan Patent No. I264237 "Nasal bone conduction hearing aid" and US Patent No. 4520238 "Pickup device for picking up vibration transmitted through bones" to arrange a bone conduction microphone or speaker at the nasal bone area, i.e., the first oscillation transducer **21** or second oscillation transducer **22** is arranged at the nasal bone area. Combining the features of the aforesaid three designs, a fourth embodiment of the invention, i.e., a nasal-spheno-temporal bone conduction communication or communication/hearing aid equipment is obtained, which is substantially similar to the aforesaid spheno-temporal bone conduction communication equipment **5** or spheno-temporal bone conduction communication equipment and hearing aid **7** with the exception that the first oscillation transducer **21** or second oscillation transducer **22** is arranged at the nasal bone area. The main difference between the "Nasal bone conduction combined spheno-temporal bone conduction communication equipment" and the spheno-temporal bone conduction communication equipment **5** is: In speaking and hearing functional combination, nasal bone conduction is employed for speaking and spheno-temporal bone conduction is employed for hearing, or nasal bone conduction is employed for hearing and spheno-temporal bone conduction is employed for speaking. The technical feature is that the carrier device **8** comprises a structural body **81** bridging the spheno-temporal bone area and allowing the supported bone skin conduction oscillator **2** in close contact with the spheno-temporal bone skin for bone skin conduction of acoustic oscillating wave, and a nose pad **82** for close contact with the nasal bone skin; the bone skin conduction oscillator **2** comprises a first oscillation transducer **21** and a second oscillation transducer **22** selectively installed in the structural body **81** or the nose pad **82,** i.e., the second oscillation transducer **22** shall be installed in the nose pad **82** if the first oscillation transducer **21** is installed in the structural body **81** (see FIG. 9), or the second oscillation transducer **22** shall be installed in the structural body **81** if the first oscillation transducer **21** is installed in the nose pad **82** (see FIG. 10). Thus, bone conduction of acoustic oscillating wave can be performed at the spheno-temporal bone area or the nasal bone area.

Further, the main difference between the "Nasal bone conduction combined spheno-temporal bone conduction communication equipment" and the spheno-temporal bone conduction communication equipment and hearing aid **7** is: In speaking and hearing functional combination, nasal bone conduction is employed for speaking and spheno-temporal bone conduction is employed for hearing, or nasal bone conduction is employed for hearing and spheno-temporal bone conduction is employed for speaking. The technical feature is that the carrier device **8** comprises a structural body **81** bridging the spheno-temporal bone area and allowing the supported bone skin conduction oscillator **2** in close contact with the spheno-temporal bone skin for bone skin conduction of acoustic oscillating wave, and a nose pad **82** for close contact with the nasal bone skin; the bone skin conduction oscillator **2** comprises a first oscillation transducer **21** and a second oscillation transducer **22** selectively installed in the structural body **81** or the nose pad **82,** i.e., the second oscillation transducer **22** shall be installed in the nose pad **82** if the first oscillation transducer **21** is installed in the structural body **81** (see FIG. 9), or the second oscillation transducer **22** shall be installed in the structural body **81** if the first oscillation transducer 21 is installed in the nose pad **82** (see FIG. 10). Thus, bone conduction of acoustic oscillating wave can be performed at the spheno-temporal bone area or the nasal bone area. By means of the signal processing module **11** of the system device **1,** switching between the communication mode and the hearing-aid mode can be done.

Referring to FIGS. 9 and 10 again, for communication application, the first oscillation transducer **21** of the bone skin conduction oscillator **2** can be installed in the left structural body **81** and/or right structural body **81,** and the second oscillation transducer **22** of the bone skin conduction oscillator **2** can be installed in the left nose pad **82** and/or the right nose pad **82,** i.e., basal bone conduction is employed for speaking and spheno-temporal bone conduction is employed for hearing (see FIG. 9). In the reversed arranged for enabling basal bone conduction to be employed for hearing and spheno-temporal bone conduction to be employed for speaking, the first oscillation transducer **21** is installed in the left nose pad **82** and/or the right nose pad **82** and the second oscillation transducer **22** is installed in the left structural body **81** and/or right structural body **81** (see FIG. 10).

For the application of "Hearing-aid", the surrounding sound pickup device 3 is arranged at the front end of each temple (see FIGS. 9 and 10), or any part of the glasses frame, and the first oscillation transducer **21** (bone skin conduction speaker) of the bone skin conduction oscillator **2** is arranged at the left nose pad **82** and/or the right nose pad **82** (see FIG. 10) or, same as the arrangement of the first oscillation transducer **21** of the spheno-temporal bone conduction hearing aid **6** (at the left structural body **81** and/or the right structural body **81** as illustrated in FIG. 9).Thus, the hearing arrangement can select nasal bone conduction or spheno-temporal bone conduction, or employ both nasal bone conduction and spheno-temporal bone conduction as desired.

In conclusion, the invention uses a carrier device **8** having a structural body **81** for bridging the spheno-temporal bone area to keep supported bone skin conduction input and output means in close contact with the spheno-temporal bone skin for enabling the outputted acoustic oscillating wave to be transmitted into the inner ear via bone conduction, or the acoustic oscillating wave produced by vibration of the skull when speaking to be converted into an electrical signal. Nasal bone skin conduction may be employed for hearing or speaking application. As the carrier device is not attached with any other component parts, the spheno-temporal bone conduction communication equipment and/or hearing-aid of the invention effectively improves the drawbacks of conventional communication equipment and/or hearing-aids.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A spheno-temporal bone conduction communication equipment (5), comprising at least:
a system device **(1)** for receiving and processing an audio signal transmitted by an external communication device and converting the audio signal into an electrical signal and then transmitting the electrical signal by means of communication transmission;
a bone skin conduction oscillator **(2)** electrically coupled with said system device **(1),** said bone skin conduction oscillator **(2)** comprising oscillation transducer means for converting an acoustic oscillating wave into an electrical signal and an electrical signal into an acoustic oscillating wave;
a carrier device **(8)** carrying said system device **(1)** and said bone skin conduction oscillator **(2);**
wherein said carrier device **(8)** comprises a structural body **(81)** carrying said bone skin conduction oscillator **(2)** for bridging the spheno-temporal bone area of the user and allowing said bone skin conduction oscillator **(2)** in close contact with the spheno-temporal bone skin of the user for bone skin conduction of acoustic oscillating wave; said spheno-temporal bone area is the area above the zygomatic arch, below the bottom edge of the calvarium, behind the orbital and in front of the ear.

2. The spheno-temporal bone conduction communication equipment **(5)** as claimed in claim 1, wherein said carrier device **(8)** is selected from the group of optical glasses, sunglasses, sports glasses, wind goggles, snow goggles and eyewear means.

3. The spheno-temporal bone conduction communication equipment **(5)** as claimed in claim 1, wherein said oscillation transducer means of said bone skin conduction oscillator **(2)** is selected from the group of piezoelectric component, PVDF (polymer of vinylidene fluoride) thin-film electronic component, electromagnetic component, electro-acoustic component and other components capable for conversion between electrical and mechanical (acoustic) energies.

4. The spheno-temporal bone conduction communication equipment **(5)** as claimed in claim 1, wherein said oscillation transducer means of said bone skin conduction oscillator **(2)** comprises a first oscillation transducer **(21)** adapted for converting an electrical signal into an acoustic oscillating wave.

5. The spheno-temporal bone conduction communication equipment **(5)** as claimed in claim 1, wherein said oscillation transducer means of said bone skin conduction oscillator **(2)** comprises a second oscillation transducer **(22)** adapted for converting an acoustic oscillating wave into an electrical signal.

6. The spheno-temporal bone conduction communication equipment **(5)** as claimed in claim 1, wherein said oscillation transducer means of said bone skin conduction oscillator **(2)** comprises a first oscillation transducer **(21)** adapted for converting an electrical signal into an acoustic oscillating wave, and a second oscillation transducer **(22)** adapted for converting an acoustic oscillating wave into an electrical signal.

7. The spheno-temporal bone conduction communication equipment **(5)** as claimed in claim 4, 5 or 6, wherein said system device **(1)** comprises at least a power supply device **(10),** a signal processing module **(11)** and an audio processing circuit **(12).**

8. The spheno-temporal bone conduction communication equipment **(5)** as claimed in claim 7, wherein said power supply device **(10)** is adapted for providing said signal processing module **(11),** said audio processing circuit **(12)** and said bone skin conduction oscillator **(2)** with the necessary working power.

9. The spheno-temporal bone conduction communication equipment **(5)** as claimed in claim 8, wherein said signal processing module **(11)** is adapted for transmitting and receiving a communication signal by means of a wired and/or wireless communication transmission interface and/or processing the communication signal to control and encode/decode audio signal, comprising therein a programmable digital signal processing system **(112).**

10. The spheno-temporal bone conduction communication equipment **(5)** as claimed in claim 8, wherein said audio processing circuit **(12)** is electrically coupled with said signal processing module **(11)** and said first oscillation transducer **(21)** and/or said second oscillation transducer **(22)** for processing audio input and/or output signals of said signal processing module **(11)** to have the audio output signal be converted into an electrical signal for driving said first oscillation transducer **(21)** to produce an acoustic oscillating wave, and/or for processing the electrical signal converted by said second oscillation transducer **(22)** from an acoustic oscillating wave into an audio input signal subject to a predetermined specification.

11. The spheno-temporal bone conduction communication equipment **(5)** as claimed in claim 8, wherein said system device **(1)** further comprises a display device **(14)** adapted for displaying system related information for the user, power on/off status and communication connection/disconnection status.

12. The spheno-temporal bone conduction communication equipment **(5)** as claimed in claim 8, wherein said system further comprises a switch device **(15)** adapted for switching on/off said signal processing module **(11),** adjusting sound volume and selection of predetermined options.

13. A spheno-temporal bone conduction hearing aid **(6),** comprising at least:
a system device **(1)** for receiving and processing an audio signal;
a bone skin conduction oscillator **(2)** electrically coupled with said system device **(1),** said bone skin conduction oscillator **(2)** comprising oscillation transducer means for converting an acoustic oscillating wave into an electrical signal;
a surrounding sound pickup device **(3)** electrically coupled with said system device **(1),** said surrounding sound pickup device **(3)** comprising an air-conduction microphone **(31);**
a carrier device **(8)** carrying said system device **(1)** and said bone skin conduction oscillator **(2)** and said surrounding sound pickup device **(3);**
wherein said carrier device **(8)** comprises a structural body **(81)** carrying said bone skin conduction oscillator **(2)** for bridging the spheno-temporal bone area of the user and allowing said bone skin conduction oscillator **(2)** in close contact with the spheno-temporal bone skin of the user for bone skin conduction of acoustic oscillating wave; said surrounding sound pickup device **(3)** is adapted for picking up surrounding sound signal for enabling the sound signal to be processed by said system device **(1)** to drive said bone conduction oscillator in converting the sound signal into an acoustic oscillating wave and transmitting the acoustic oscillating wave into the inner ear of the user via the spheno-temporal bone of the user; said spheno-temporal bone area is the area above the zygomatic arch, below the bottom edge of the calvarium, behind the orbital and in front of the ear.

14. The spheno-temporal bone conduction hearing aid **(6)** as claimed in claim 13, wherein said carrier device **(8)** is selected from the group of optical glasses, sunglasses, sports glasses, wind goggles, snow goggles and eyewear means.

15. The spheno-temporal bone conduction hearing aid **(6)** as claimed in claim 13, wherein said oscillation transducer means of said bone skin conduction oscillator **(2)** is selected from the group of piezoelectric component, PVDF (polymer of vinylidene fluoride) thin-film electronic component, electromagnetic component, electro-acoustic component and other components capable for conversion between electrical and mechanical (acoustic) energies.

16. The spheno-temporal bone conduction hearing aid **(6)** as claimed in claim 13, wherein said surrounding sound pickup device **(3)** is adapted for picking up surrounding sound and converting the surrounding sound into an electrical signal and transmitting the electrical signal to said system device **(1)** for processing.

17. The spheno-temporal bone conduction hearing aid **(6)** as claimed in claim 16, wherein said system device **(1)** comprises at least a power supply device **(10),** a signal processing module **(11)** and an audio processing circuit **(12);** said oscillation transducer means of said bone skin conduction oscillator **(2)** comprises a first oscillation transducer **(21)** adapted for converting an electrical signal into an acoustic oscillating wave; said signal processing module **(11)** is adapted for transmitting the electrical signal outputted by said surrounding sound pickup device **(3)** to said audio processing signal for processing into an electrical signal capable of driving said first oscillation transducer **(21**) to produce an acoustic oscillating wave.

18. A spheno-temporal bone conduction communication equipment and hearing aid **(7),** comprising at least:
a system device **(1)** for receiving and processing an audio signal and converting the audio signal into an electrical signal for output, said system device **(1)** comprising a power supply device **(10),** a signal processing module **(11)** and an audio processing circuit **(12);**
a bone skin conduction oscillator **(2)** electrically coupled with said system device **(1),** said bone skin conduction oscillator **(2)** comprising oscillation transducer means adapted for converting an acoustic oscillating wave into an electrical signal and an electrical signal into an acoustic oscillating wave;
a surrounding sound pickup device **(3)** electrically coupled with said system device **(1),** said surrounding sound pickup device **(3)** comprising an air-conduction microphone **(31);**
a carrier device **(8)** carrying said system device **(1)** and said bone skin conduction oscillator **(2)** and said surrounding sound pickup device **(3);**
wherein said carrier device **(8)** comprises a structural body **(81)** carrying said bone skin conduction oscillator **(2)** for bridging the spheno-temporal bone area of the user and allowing said bone skin conduction oscillator **(2)** in close contact with the spheno-temporal bone skin of the user for bone skin conduction of acoustic oscillating wave; said signal processing module **(11**) of said system device **(1**) is switchable between a communication mode and a hearing-aid mode; said spheno-temporal bone area is the area above the zygomatic arch, below the bottom edge of the calvarium, behind the orbital and in front of the ear.

19. A nasal bone conduction combined spheno-temporal bone conduction communication equipment **(5),** comprising at least:
a system device **(1)** for receiving and processing an audio signal transmitted by an external communication device and converting the audio signal into an electrical signal for output;
a bone skin conduction oscillator **(2)** electrically coupled with said system device **(1),** said bone skin conduction oscillator **(2)** comprising oscillation transducer means adapted for converting an acoustic oscillating wave into an electrical signal and an electrical signal into an acoustic oscillating wave;
a carrier device **(8)** carrying said system device **(1)** and said bone skin conduction oscillator **(2);**
wherein said carrier device **(8)** comprises a structural body **(81)** carrying said bone skin conduction oscillator **(2)** for close contact with the spheno-temporal bone skin of the user for bone skin conduction of an acoustic oscillating wave and a nose pad **(82)** for close contact with the nasal bone skin of the user for bone skin conduction of an acoustic oscillating wave; said oscillation transducer means of said bone skin conduction oscillator **(2)** comprises a first oscillation transducer **(21)** and a second oscillation transducer **(22)** alternatively selectively installed in said structural body **(81)** and said nose pad **(82);** said spheno-temporal bone area is the area above the zygomatic arch, below the bottom edge of the calvarium, behind the orbital and in front of the ear.

20. A nasal bone conduction combined spheno-temporal bone conduction communication equipment and hearing aid **(7),** comprising at least:
a system device **(1)** for receiving and processing an audio signal and converting the audio signal into an electrical signal for output, said system device **(1)** comprising a power supply device **(10),** a signal processing module (11) and an audio processing circuit **(12);**
a bone skin conduction oscillator **(2)** electrically coupled with said system device **(1),** said bone skin conduction oscillator **(2)** comprising oscillation transducer means for converting an acoustic oscillating wave into an electrical signal and an electrical signal into an acoustic oscillating wave;
a surrounding sound pickup device **(3)** electrically coupled with said system device **(1),** said surrounding sound pickup device **(3)** comprising an air-conduction microphone **(31);**
a carrier device **(8)** carrying said system device **(1)** and said bone skin conduction oscillator **(2)** and said surrounding sound pickup device **(3);**
wherein said carrier device **(8)** comprises a structural body **(81)** carrying said bone skin conduction oscillator **(2)** for close contact with the spheno-temporal bone skin of the user for bone skin conduction of an acoustic oscillating wave and a nose pad **(82)** for close contact with the nasal bone skin of the user for bone skin conduction of an acoustic oscillating wave; said oscillation transducer means of said bone skin conduction oscillator **(2)** comprises a first oscillation transducer **(21)** and a second oscillation transducer **(22)** alternatively selectively installed in said structural body **(81)** and said nose pad **(82)** for bone skin conduction of an acoustic oscillating wave; said signal processing module **(11)** of said system device **(1)** is switchable between a communication mode and a hearing-aid mode; said spheno-temporal bone area is the area above the zygomatic arch, below the bottom edge of the calvarium, behind the orbital and in front of the ear.
